Europäisches Patentamt

European Patent Office

Office européen des brevets

(19)

(11) **EP 0 568 438 B1**

(12) **FASCICULE DE BREVET EUROPEEN**

(45) Date de publication et mention
de la délivrance du brevet:
**22.09.1999 Bulletin 1999/38**

(51) Int Cl.⁶: **G06F 12/14**

(21) Numéro de dépôt: **93401084.4**

(22) Date de dépôt: **27.04.1993**

(54) **Procédé de sécurisation de programmes exécutables contre l'utilisation par une personne non habilitée et système sécurisé pour la mise en oeuvre du procédé**

Verfahren zum Sichern von ausführbaren Programmen gegen die Benutzung durch eine unbefugte Person und Sicherheitssystem für seine Anwendung

Method for securing of executable programs against utilisation by an unauthorized person and security system for its application

(84) Etats contractants désignés:
**DE ES FR GB IT**

(30) Priorité: **27.04.1992 FR 9205187**

(43) Date de publication de la demande:
**03.11.1993 Bulletin 1993/44**

(73) Titulaire: **GEMPLUS CARD INTERNATIONAL
F-13420 Gémenos (FR)**

(72) Inventeur: **Stasi, Corinne,
Cabinet BALLOT-SCHMIT
F-75116 Paris (FR)**

(74) Mandataire: **Schmit, Christian Norbert Marie et al
Cabinet Ballot-Schmit
7, rue Le Sueur
75116 Paris (FR)**

(56) Documents cités:
**EP-A- 0 339 115        GB-A- 2 205 667
US-A- 4 944 008**

## Description

L'invention concerne un procédé de sécurisation de programmes exécutables contre l'utilisation par une personne non habilitée.

L'invention s'applique à tout programme exécutable par des moyens de traitement de données. Elle s'applique notamment à des programmes permettant d'établir une connexion avec un système informatique comme c'est le cas par exemple avec le système d'exploitation DOS et plus particulièrement avec le système d'exploitation UNIX utilisé généralement sur les stations de travail. On rappelle que l'on entend par station de travail, des postes individuels dédiés ayant une capacité de calcul importante permettant des applications telles que la CAO et fonctionnant généralement avec le système d'exploitation.

Il est en effet usuel que la connexion à une station de travail se fasse par un programme exécutable de connexion UNIX.

Le procédé conforme à l'invention s'applique avantageusement à la sécurisation de tels programmes de connexion.

On rappelle également que dans le cas des stations de travail, le programme de connexion est exécuté pour initialiser une session. Pour cela un utilisateur saisit à partir du clavier un nom d'utilisateur qui lui est propre et un mot de passe qui lui a été affecté. Les mots de passe et les noms d'utilisateurs des personnes habilitées à se connecter sont connus du système. S'il y a concordance entre les informations enregistrées préalablement et rentrées à partir du clavier alors le programme de connexion s'exécute et la connexion est établie.

D1 : GB-A-2 205 667 (NCR Corporation)concerne une méthode de contrôle d'un module de sécurité applicable en particulier à la vérification de code d'identification personnels (PIN) ou au contrôle d'accès. Lors de l'initialisation, un nombre aléatoire KSK est stocké dans un registre - qui peut être remis à zéro si une effraction est détectée -. Puis une clé d'authentification KA est appliquée au module, encryptée au moyen de KSK, par exemple en appliquant une encryption DES à la paire KSK-KA et chargée dans une mémoire protégée 36. Enfin le progiciel initial est chargée dans la mémoire de programme. Avant tout chargement d'un progiciel modifié, une valeur d'authentification FAV correspondante est calculée et chargée en même temps dans la mémoire. Un processeur situé dans le module recalcule la valeur d'authentification FAV' au moyen de la clé d'authentification KA mémorisée. La valeur FAV' ainsi obtenue est comparée à la valeur FAV pour autoriser le chargement du progiciel modifié.

EP-A-0 339 115 (Siemens)décrit une méthode de protection d'un programme selon laquelle un premier jeu de données (D1) formé par des caractéristiques du système (M1) et des données attribut allouées au programme (A1,A2) est codé pour former un second jeu de données, qui permet de déverrouiller l'utilisation du programme.

US-A-4 944 008 (PIOSENKA et al.)concerne un système de verrouillage électronique de données qui modifie les données en fonction d'une clé variable obtenue au moyen d'un nombre pseudo-aléatoire et d'une variable clé.

Or il s'avère que de telles protections ne sont pas infaillibles car il arrive trop souvent que des personnes non habilitées parviennent à établir les connexions.

La présente invention permet de résoudre ce problème.

Elle a pour objet un procédé de sécurisation de tout programme exécutable par des moyens de traitement de données et notamment un procédé de sécurisation du programme de connexion à une station de travail.

La présente invention a plus particulièrement pour objet un procédé de sécurisation d'un programme exécutable par des moyens de traitement de données contre toute utilisation par une personne non habilitée.

Le procédé est défini par la revendication 1.

Un système correspondant est défini à la revendication 7.

D'autres caractéristiques et avantages de l'invention apparaîtront à la lecture de la description détaillée qui est donnée à titre indicatif et nullement limitatif. Cette description se réfère à des dessins annexés sur lesquels :

- la figure 1, représente un schéma général de l'ensemble de sécurisation selon l'invention;
- la figure 2, représente un schéma d'organisation d'une mémoire de programme selon l'invention;
- la figure 3, représente un tableau illustrant les échanges entre carte à puce et moyens de traitement.

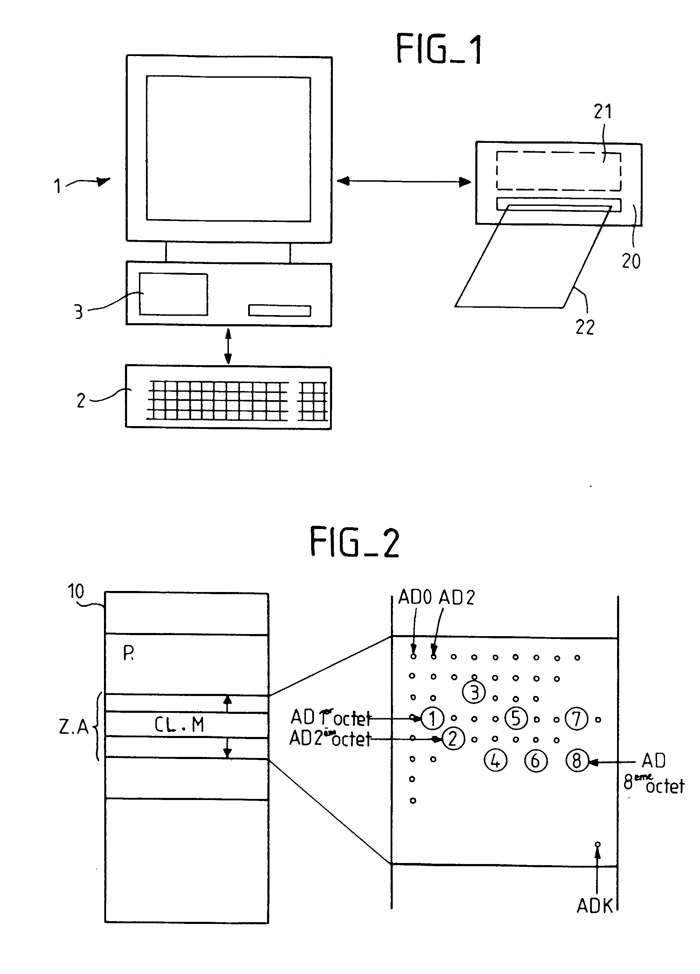

La figure 1 représente des moyens de traitement 1 représentés sous la forme d'un micro-ordinateur ou d'une station de travail reliés à une clavier 2. Bien entendu, ces moyens de traitement peuvent être toute autre système informatique capable d'exécuter un programme à sécuriser contre des utilisations non autorisées. Pour simplifier on parlera dans la suite de système.

La mémoire de programme a été symbolisée par une zone portant la référence 3 et est représentée de façon plus détaillée sur la figure 2.

Dans cette mémoire de programme 3 un ou plusieurs programmes ont été enregistrés. L'exécution de l'un au moins de ces programmes est verrouillée de manière à ne pouvoir être lancée que par des personnes habilitées. Pour cela le programme exécutable P, comporte une clé dite clé mère cachée dans une zone ZA de données aléatoires et déchiffrable seulement par une personne habilitée.

La clé mère est une donnée aléatoire entrée, dans le système par l'utilisateur habilité, au moment de l'installation du programme et, qui est cachée à une adresse dans cette zone ZA, obtenue par chiffrement. L'adresse est chiffrée à partir de la clé mère et d'une donnée unique au programme.

Le chiffrement de l'adresse consiste par exemple à appliquer un algorithme DES (ou RSA) à la donnée formée par la clé mère et par la donnée unique au programme.

Selon un exemple préféré la donnée unique au programme est constituée par la date d'installation du programme dans le système, date donnée par le système et qui est bien unique à ce programme puisqu'elle tient compte de l'heure des minutes et des secondes et que la probabilité pour obtenir une même date est quasiment nulle.

De plus, selon un exemple préféré de réalisation la clé est éclatée de façon aléatoire dans la zone ZA.

La clé comporte n octets. Chaque octet se trouve réparti dans cette zone à une adresse qui est de ce fait également éclatée. L'adresse de chaque octet correspond à un octet du résultat du calcul de chiffrement. On peut se reporter au schéma de la figure 2 sur lequel on a représenté les emplacements AD de 8 octets dans la zone ZA, d'une clé mère ayant 8 octets à titre d'exemple.

La donnée unique, à savoir la date d'installation, est stockée à une adresse éclatée mais fixe dans la zone ZA connue du système de manière à ce que le système puisse retrouver la clé mère au moment voulu.

Lorsque dans un système un programme est ainsi sécurisé, les utilisateurs habilités ont, par le biais d'échanges d'informations secrètes, la possibilité de déverrouiller l'exécution de ce programme de la façon indiquée dans la suite.

Ainsi et de façon pratique chaque utilisateur possède une carte à mémoire dans laquelle sont enregistrés, un code secret connu uniquement par le titulaire de la carte, un nom d'utilisateur connu également par le titulaire de la carte, et une clé de référence secrète.

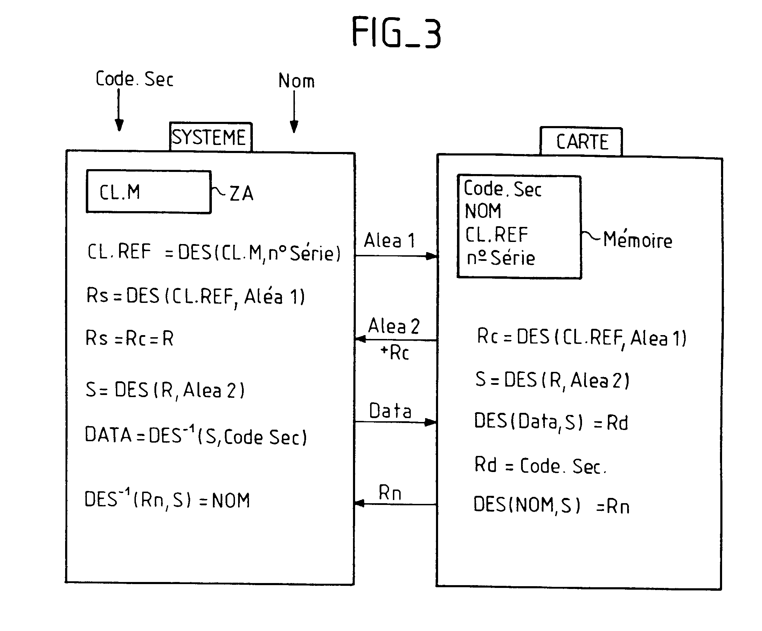

Lorsqu'une personne habilitée désire lancer l'exécution du programme sécurisé, cette personne introduit sa carte 22 dans le lecteur 20 relié au système 1 puis, introduit à partir du clavier 2 du système son code secret et son nom d'utilisateur. Des échanges sont alors effectués entre le système et la carte par le biais du lecteur. Ces échanges sont représentés sur le tableau de la figure 3 et ont pour objet de réaliser le déchiffrement de la clé mère par toute personne habilitée qui est par conséquent authentifiée et autorisée. La clé mère (CL. M.) est cachée dans la zone ZA tel que décrit précédemment.

Le système calcule la clé de référence CL. REF à partir de CL.M. et du numéro de série lu sur la carte.

$$CL.\ REF = f(CL.M, n°\ Série)$$

La fonction f est de préférence pour tous les calculs de chiffrement réalisée par un algorithme de type DES ou RSA.

Après ce premier calcul, le système envoi une première donnée aléatoire : Alea 1, à la carte.

La carte calcule un résultat de chiffrement Rc à partir de Alea 1 et de CL. REF.

Le système calcule de son côté un résultat RS tel que :

$$Rs = f(CL.REF,\ Alea\ 1)$$

Le système reçoit de la carte une deuxième donnée aléatoire Alea 2 et le résultat Rc.

Le système compare Rs et Rc. Si ces résultats sont égaux alors la carte est authentifiée sinon elle est rejetée. On prend par la suite Rs = Rc = R.

Le système calcule alors une clé de session S.

$$S = f(R,\ Alea\ 2)$$

Le système envoi ensuite une donnée chiffrée Data, à la carte telle que :

Data = $f^{-1}$ (S, Code.Sec) où $f^{-1}$ est l'inverse de f.

La carte calcule alors ensuite un résultat Rd tel que :

$$Rd = f(data,\ S)$$

La carte compare la donnée Rd et la donnée Code.Sec. enregistrées en mémoire pour savoir si le code rentré par l'utilisateur est identique à celui de la carte.
Lorsque c'est le cas l'utilisateur est authentifié. Il y a en fait une authentification réciproque entre le système et le titulaire de la carte.
La carte calcule alors un résultat Rn tel que :

$$Rn = f(NOM,\ S)$$

La donnée NOM est le nom d'utilisateur enregistré sur la carte.

Le résultat Rn est transmis au système qui déchiffre la donnée NOM en appliquant la fonction $f^{-1}$ (inverse de f).

$$f^{-1}\ (Rn,\ S) = NOM$$

Si la donnée déchiffrée NOM est bien égale à la donnée NOM entrée par l'utilisateur alors, cet utilisateur est autorisé.

Lorsque l'authentification a eu lieu le programme s'exécute.

A l'installation du programme ainsi protégé, l'installateur dispose d'une carte installateur qui permet de mémoriser la clé mère que l'utilisateur habilité a entré dans le système à partir du clavier et qui est enregistrée dans la zone ZA, et de calculer la clé de référence à partir de cette clé mère et du numéro de série de la carte qui va être remise à l'utilisateur. La carte installateur est utilisée pour préparer les cartes utilisateurs. En effet, cette carte installateur est utilisée pour mémoriser les informations d'identification de la carte et de son titulaire à savoir : le code secret, le nom d'utilisateur, la clé de référence.

Comme cela a été dit précédemment le procédé s'applique notamment aux stations de travail. Il permet par exemple, dans ce cas, de sécuriser le mode d'accès à la station, le programme exécutable sécurisé étant alors le programme de connexion.

Le procédé pourra également être utilisé dans le cas de location de programme afin de réaliser un contrôle du nombre d'utilisations du programme par simple comptage des accès à ce programme et verrouiller l'accès et donc l'exécution lorsque le nombre d'utilisation aura atteint une limite pré-enregistrée prévue par le contrat de location.

## Revendications

1. Procédé de sécurisation d'un programme (P) exécutable par des moyens de traitement de données (1) contre toute utilisation par une personne non habilitée caractérisé en ce qu'il comprend les étapes suivantes :

   A) au moment de l'installation du programme,

   - choix et introduction par un utilisateur habilité d'une clé mère (CL.M) pour verrouiller l'exécution du programme,
   - calculer par chiffrement une adresse de mémorisation de la clé mère à l'intérieur d'un bloc (Z.A) de données aléatoires contenues dans le programme exécutable, le calcul de l'adresse de mémorisation de la clé mère consistant à chiffrer cette clé mère avec une donnée unique au programme au moyen d'un algorithme (DES) de chiffrement, le résultat étant sur n octets,
   - mémoriser cette clé mère à cette adresse,

   B) lors des utilisations,

   - déchiffrer l'adresse de la clé mère à partir d'informations d'identification et/ou d'authentification de la personne cherchant à lancer l'exécution du programme, l'identification et/ou l'authentification consistant à :
   fournir à tout utilisateur habilité une carte à puce dans laquelle on a au préalable mémorisé des informations d'identification et/ou d'authentification de la carte et du porteur, ces informations comportant :

   - le n° de série de la carte,
   - un nom d'identification du titulaire de la carte,
   - un code secret connu du titulaire,
   - une clé de référence (CL.REF) fonction de la clé mère.

   - identifier et/ou authentifier la personne lorsque le déchiffrement a bien eu lieu pour provoquer l'exécution du programme, la carte comparant le code secret entré par la personne à une donnée calculée.

2. Procédé de sécurisation selon la revendication 1, selon lequel la clé mère est une donnée aléatoire de n octets choisie arbitrairement par ledit programme exécutable.

3. Procédé de sécurisation selon l'une quelconque des revendications précédentes, selon lequel la clé mère est éclatée en plusieurs adresses dans le bloc de données aléatoires.

4. Procédé selon la revendication précédente, selon lequel la clé est éclatée de manière à ce que chaque octet soit à l'adresse donnée par chaque octet des n octets d'adresse obtenus par chiffrement.

5. Procédé selon l'une quelconque des revendications précédentes, selon lequel la donnée unique de chaque programme est sa date d'installation dans les moyens de traitement.

6. Procédé selon l'une quelconque des revendications précédentes, selon lequel l'étape d'identification et/ou d'authentification consiste à réaliser une authentification réciproque entre la carte et le système et consiste pour la carte à :

   - transmettre le n° de série de la carte aux moyens de traitement,
   - calculer un premier résultat par chiffrement de la clé de référence résidente et d'un premier aléa reçu,
   - à calculer un deuxième résultat (S) par chiffrement du résultat précédent et d'un deuxième aléa et à transmettre le premier résultat et le deuxième aléa,
   - à calculer par chiffrement le code secret à partir d'une donnée (Data) reçue et du deuxième résultat,
   - à comparer le code secret obtenu par le calcul et le code secret résident,

- à authentifier l'utilisateur dans le cas où les deux codes sont identiques,
- à transmettre le nom du titulaire de la carte, chiffré,

et pour les moyens de traitement à :

- calculer la clé de référence par chiffrement du numéro de série à partir de la clé mère,
- à transmettre un premier aléa,
- à calculer un résultat par chiffrement du premier aléa et de la clé de référence obtenue,
- à comparer ce résultat avec le premier résultat obtenu dans la carte,
- à calculer une clé de session par chiffrement du résultat et du deuxième aléa,
- à calculer une donnée (Data) par déchiffrement de la clé de session et du code secret rentré par l'utilisateur,
- à transmettre cette donnée (Data) à la carte,
- à déchiffrer le nom reçu de la carte et comparer avec le nom rentré

7. Système informatique sécurisé comportant des moyens de traitement de données (1) comprenant une mémoire de programme dans laquelle sont enregistrés un ou plusieurs programmes exécutables, les moyens étant reliés à un clavier et à un lecteur de carte, caractérisé en ce que

la mémoire de programme comporte une zone dans laquelle au moins un programme exécutable (P) est sécurisé, son exécution ne pouvant avoir lieu que sous condition d'habilitation, en ce que pour cela le programme comporte une clé mère (CL.M) choisie et entrée par un utilisateur habilité au moment de l'installation du programme et enregistrée à une adresse chiffrée à l'intérieur d'un bloc (Z.A) de données aléatoires de la zone dans laquelle est enregistré le programme le calcul de l'adresse de mémorisation de la clé mère consistant à chiffrer cette clé mère avec une donnée unique au programme au moyen d'un algorithme de chiffrement, le résultat étant sur n octets, et en ce que les cartes des utilisateurs habilités comportent, outre le n° de série de la carte, un nom d'identification du titulaire de la carte, un code secret connu du titulaire, et une clé de référence (CL.REF) fonction de la clé mère permettant aux moyens de traitement de déchiffrer l'adresse de la clé mère et d'identifier et/ou d'authentifier le titulaire de la carte et de déverrouiller ainsi l'exécution du programme, le titulaire ayant introduit son code secret et son nom d'utilisateur, la carte ayant comparé le code secret entré par la personne à une donnée calculée.

8. Système informatique selon la revendication 7, caractérisé en ce que les moyens de traitement comprennent une station de travail.

**Patentansprüche**

1. Verfahren zum Sichern eines Programms (P), das durch Datenverarbeitungsvorrichtungen (1) ausführbar ist, gegen jede Verwendung durch unberechtigte Personen, dadurch gekennzeichnet, daß es die folgenden Schritte umfaßt:

A) Zum Zeitpunkt der Installierung des Programmes

- Auswahl und Einführung durch einen Anwender, der durch einen Generalschlüssel (CL.M) zum Verriegeln der Ausführung des Programmes berechtigt ist,

- Berechnen durch Verschlüsseln einer Adresse zum Abspeichern des Generalschlüssels im Inneren eines Blockes (Z.A) von zufälligen Daten, die in dem ausführbaren Programm enthalten sind, wobei die Berechnung der Adresse zum Abspeichern des Generalschlüssels darin besteht, diesen Generalschlüssel mit einem für das Programm eindeutigen Datenwert mittels eines Verschlüsselungsalgorithmus (DES) zu verschlüsseln, wobei das Ergebnis n Bytes beansprucht,

- Abspeichern dieses Generalschlüssels bei dieser Adresse,

B) Im Betrieb

- Entschlüsseln der Adresse des Generalschlüssels aus Identifizierungsinformationen und/oder Authentifizierungsinformationen zu der Person, die die Ausführung des Programms bewirken will, wobei die Identifizierung und/oder Authentifizierung besteht in:
Ausgeben einer Chipkarte an jeden berechtigten Anwender, auf der vorher Identifizierungs- und/oder Authentifizierungsinformationen der Karte und des Inhabers abgespeichert wurden, wobei diese Informationen umfassen:

- Die Seriennummer der Karte,

- einen Identifizierungsnamen des Inhabers der Karte,

- einen dem Inhaber bekannten Geheimcode,

- einen Referenzschlüssel (CL.REF), der von dem Generalschlüssel abhängt,

- Identifizieren und/oder Authentifizieren der Person, wenn das Entschlüsseln zum Auslösen der Ausführung des Programms erfolgreich durchgeführt worden ist, wobei die Karte den Geheimcode, der durch die Person eingegeben wurde, mit einem berechneten Datensatz vergleicht.

2. Verfahren zum Sichern nach Anspruch 1, bei dem der Generalschlüssel ein Zufallsdatensatz mit n Bytes ist, der zufällig durch das ausführbare Programm ausgewählt wird.

3. Verfahren zum Sichern nach einem der vorangehenden Ansprüche, bei dem der Generalschlüssel aufgesplittert ist in mehrere Adressen in dem Block von zufälligen Daten.

4. Verfahren nach dem vorangehenden Anspruch, bei dem der Schlüssel derart aufgesplittert ist, daß jedes Byte sich an der Adresse befindet, die durch jedes Byte von n Bytes der Adresse, die durch Verschlüsselung erhalten werden, angegeben wird.

5. Verfahren nach einem der vorangehenden Ansprüche, bei dem der eindeutige Datenwert von jedem Programm dessen Installationsdatum in den Verarbeitungsvorrichtungen ist.

6. Verfahren nach einem der vorangehenden Ansprüche, bei dem der Schritt der Identifizierung und/oder Authentifizierung darin besteht, eine reziproke Authentifizierung zwischen der Karte und dem System durchzuführen, und für die Karte besteht in:

- Übertragen der Seriennummer der Karte an die Verarbeitungsvorrichtungen,

- Berechnen eines ersten Ergebnisses durch Verschlüsseln des residenten Referenzschlüssels und eines ersten empfangenen Zufallswertes,

- Berechnen eines zweiten Ergebnisses (S) durch Verschlüsseln des vorangehenden Ergebnisses und eines zweiten Zufalls und Übertragen des ersten Ergebnisses und des zweiten Zufallswertes,

- Berechnen des Geheimcodes durch Verschlüsseln eines empfangenen Datensatzes (Data) und des zweiten Ergebnisses,

- Vergleichen des durch Berechnung erhaltenen Geheimcodes und des residenten Geheimcodes,

- Authentifizieren des Anwenders für den Fall, daß die beiden Codes identisch sind,

- Übertragen des Inhabernamens der Karte in verschlüsselter Form,

und für die Verarbeitungsvorrichtungen besteht in:

- Berechnen des Referenzschlüssels durch Verschlüsseln der Seriennummer auf der Basis des Generalschlüssels,

- Übertragen eines ersten Zufallswertes,

- Berechnen eines Ergebnisses durch Verschlüsseln des ersten Zufallswertes und des erhaltenen Referenzschlüssels,

- Vergleichen dieses Ergebnisses mit dem ersten auf der Karte erhaltenen Ergebnis,

- Berechnen eines Arbeitsgangschlüssels durch Verschlüsseln des Ergebnisses und des zweiten Zufallswertes,

- Berechnen eines Datenwertes (Data) durch Entschlüsseln des Arbeitsgangschlüssels und des vom Anwender erneut eingegebenen Geheimcodes,

- Übertragen dieses Datenwertes (Data) auf die Karte,

- Entschlüsseln des von der Karte empfangenen Namens und Vergleichen mit dem erneut eingegebenen Namen.

7. Gesichertes Informationssystem mit Datenverarbeitungsvorrichtungen (1) mit einem Programmspeicher, in welchem ein oder mehrere ausführbare Programme abgelegt sind, wobei die Vorrichtungen mit einer Tastatur und einem Kartenleser verbunden sind, dadurch gekennzeichnet, daß

der Programmspeicher einen Bereich umfaßt, in welchem wenigstens ein ausführbares Programm (P) abgesichert ist, so daß seine Ausführung nur bei Berechtigung stattfinden kann,

das Programm dafür einen Generalschlüssel (CL.M) umfaßt, der ausgewählt und eingegeben wird durch den berechtigten Anwender zum Zeitpunkt der Installation des Programms und abgespeichert ist unter einer verschlüsselten Adresse in einem Block (Z.A) von Zufallsdaten in dem Bereich, in welchem das Programm abgespeichert ist, wobei das Berechnen der Speicheradresse des Generalschlüssels darin besteht, diesen Generalschlüssel mit einem für das Programm eindeutigen Datenwert mittels eines Verschlüsselungsalgorithmus zu verschlüsseln, wobei das Ergebnis n Bytes beansprucht, und

die Karten von berechtigten Anwendern außer der Seriennummer der Karte einen Identifizierungsschlüssel des Inhabers der Karte, einen dem Inhaber bekannten Geheimcode und einen Referenzschlüssel (CL.REF) umfassen, der von dem Generalschlüssel abhängt, wodurch mittels Verarbeitungsvorrichtungen die Adresse des Generalschlüssels entschlüsselbar ist und der Inhaber der Karte identifizierbar und/oder authentifizierbar ist und so die Ausführung des Programms freigebbar ist, wobei der Inhaber seinen Geheimcode und seinen Anwendernamen eingegeben hat und die Karte den Geheimcode, der durch die Person eingegeben wurde, mit einem berechneten Datenwert verglichen hat.

8.  Informationssystem nach Anspruch 7, dadurch gekennzeichnet, daß die Verarbeitungsvorrichtungen eine work station umfassen.

## Claims

1.  A method of providing security protection for a programme (P) which can be run by data processing means (1) against use by an unauthorised person, characterised in that it comprises the following steps:

    A) when the programme is installed

    -   an authorised user chooses and introduces a parent key (CL.M) to lock running of the programme,
    -   a memory address for the parent key is computed by encryption inside a block (Z. A) of random data contained in an executable programme, computation of the memory address of the parent key consisting in encrypting this parent key with an item of data unique to the programme by means of an encryption algorithm (DES), the result being on n octets,
    -   storing this parent key at this address,

    B) and when it is used

    -   the address of the parent key is decrypted on the basis of information identifying and/ or authenticating the person trying to run the programme, the identification and/or authentication consisting in: providing every authorised user with a chip card in which information identifying and/or authenticating the card and the bearer has been stored beforehand, this information comprising:

        -   the serial number of the card,
        -   a name identifying the owner of the card,
        -   a secret code known to the owner,
        -   a reference key (CL.REF) dependent on the parent key,

    -   identifying and/or authenticating the person once the decryption has been completed in order to cause the programme to run, the card comparing the secret code entered by the person with a computed data item.

2.  A method of security protection as claimed in claim 1, wherein the parent key is a random data item of n octets selected arbitrarily by said executable programme.

3.  A method of security protection as claimed in any one of the preceding claims, wherein the parent key is scattered across several addresses in the block of random data.

4.  A method as claimed in the preceding claim, wherein the key is scattered so that each octet is located at the address given by each octet of the n address octets obtained by encryption.

5.  A method as claimed in any one of the preceding claims, wherein the unique data item of each programme is the date on which it was installed in the processing means.

6.  A method as claimed in any one of the preceding claims, wherein the identification and/or authentication step consists in running a reciprocal authentication between the card and the system and, in the case of the card, consists in:

    -   transmitting the serial number of the card to the processing means,
    -   computing a first result by encrypting the first resident reference key and a first random number received,

- computing a second result (S) by encrypting the preceding result and a second random number and transmitting the first result and the second random number,
- computing the secret code, by encryption, on the basis of a data item (Data) received and the second result,
- comparing the secret code obtained by computation and the resident secret code,
- authenticating the user if the two codes are identical,
- transmitting the name of the owner of the card, encrypted,

and, in the case of the processing means, in:

- computing the reference key by encrypting the serial number on the basis of the parent key,
- transmitting a first random number,
- computing a result by encrypting the first random number and the reference key obtained,
- comparing this result with the first result obtained in the card,
- computing a session key by encrypting the result and the second random number,
- computing a data item (Data) by decrypting the session key and the secret code returned by the user,
- transmitting this data item (Data) to the card,
- decrypting the name received from the card and comparing it with the name entered.

7. A security protected computer system comprising data processing means (1) having a programme memory in which one or more executable programmes are stored, the means being connected to a keyboard and a card reader, characterised in that the programme memory has a zone in which at least one executable programme (P) is security protected so that it may not be run unless authorisation is issued, in that to this end, the programme has a parent key (CL.M) selected and entered by the authorised user at the time of installation of the programme and stored at an encrypted address inside a block (Z.A) of random data in the zone in which the programme is stored, computation of the memory address for the parent key consisting in encrypting this parent key with a data item unique to the programme by means of an encryption algorithm, the result being on n octets, and in that the cards of authorised users have, in addition to the serial number of the card, a name identifying the owner of the card, a secret code known to the owner and a reference key (CL.REF) dependent on the parent key enabling the processing means to decrypt the address of the parent key and identify and/or authenticate the owner of the card and thereby unlock execution of the programme, the owner having entered his secret code and his user name, and the card having compared the secret code entered by the person with a computed data item.

8. A computer system as claimed in claim 7, characterised in that the processing means incorporate a workstation.

# FIG_1

# FIG_2

# FIG_3

**SYSTEME**

Code. Sec → | Nom →

CL.M ~ ZA

$CL.REF = DES(CL.M, n° Série)$

$Rs = DES(CL.REF, Aléa 1)$

$Rs = Rc = R$

$S = DES(R, Alea 2)$

$DATA = DES^{-1}(S, Code Sec)$

$DES^{-1}(Rn, S) = NOM$

**CARTE**

Code. Sec
NOM
CL.REF
n° Série ~ Mémoire

$Rc = DES(CL.REF, Alea 1)$

$S = DES(R, Alea 2)$

$DES(Data, S) = Rd$

$Rd = Code. Sec.$

$DES(NOM, S) = Rn$

Alea 1 → | Alea 2 +Rc ← | Data → | Rn ←